# EUROPEAN PATENT APPLICATION

(11) **EP 4 386 058 A1**
(43) Date of publication of application: **19.06.2024**
(21) Application number: 22855849.0
(22) Date of filing: 05.08.2022
(51) Int. Cl.: C09J 4/02, C09J 11/04, C09J 11/06

(54) **ANAEROBIC ADHESIVE COMPOSITION**

(30) Priority: 11.08.2021 JP 2021131256
(71) Applicant: Okura Industrial Co., Ltd., Marugame-shi, Kagawa 763-8508 (JP)
(72) Inventor: ITAMI, Shuhei, Marugame-shi, Kagawa 763-8508 (JP); NISHI, Hideki, Marugame-shi, Kagawa 763-8508 (JP); GOTO, Keisuke, Marugame-shi, Kagawa 763-8508 (JP)
(74) Representative: Dennemeyer & Associates S.A.
(86) International application number: PCT/JP2022/030054
(87) International publication number: WO 2023/017787

(57) **Abstract**

To achieve an anaerobic adhesive composition capable of suppressing occurrence of coating failure during coating. The anaerobic adhesive composition of the present invention includes a (meth)acrylic monomer, an organic peroxide, a curing accelerator, and an isoparaffin wax.

## Description

### TECHNICAL FIELD

The present invention relates to an anaerobic adhesive composition.

### BACKGROUND ART

Examples of a known adhesive composition using a (meth)acrylic monomer include an anaerobic adhesive composition, a two-component curable (meth)acrylic adhesive composition represented by a second generation acrylic adhesive agent (SGA), and an ultraviolet curable adhesive composition. The anaerobic adhesive composition is preserved by taking advantage of the fact that the (meth)acrylic monomer is subjected to a polymerization inhibiting action by oxygen in the air. Then, the anaerobic adhesive composition is, for example, cured by polymerization of the (meth)acrylic monomer when a fine gap of metal or the like is filled with the anaerobic adhesive composition to block oxygen. Taking advantage of this property, the anaerobic adhesive composition is used for preventing loosening of bolts and nuts, fixing bearings and shafts, and the like.

Known examples of such an anaerobic adhesive composition are: an anaerobic adhesive composition that contains an acrylic monomer, an organic peroxide, a curing accelerator, and the like; and an anaerobic adhesive composition that contains a paraffin wax (see, for example, Patent Literatures 1 and 2).

### CITATION LIST

### PATENT LITERATURE

Patent Literature 1: JP-A-10-279888
Patent Literature 2: JP-A-8-53506

### SUMMARY OF INVENTION

### PROBLEMS TO BE SOLVED BY INVENTION

The anaerobic adhesive composition is, for example, applied onto a part to be bonded through a nozzle using a dispenser. In a known anaerobic adhesive composition, the anaerobic adhesive composition in contact with the air at the tip of the nozzle is dried, and a film is formed on the surface of the anaerobic adhesive agent, which may cause coating failure. This phenomenon may cause not only coating failure but also curing failure of the anaerobic adhesive composition or insufficient adhesive strength.

An object of an aspect of the present invention is to achieve an anaerobic adhesive composition capable of suppressing the occurrence of coating failure during coating which is caused by drying of the anaerobic adhesive composition.

### SOLUTION TO PROBLEMS

In order to solve the above problems, an anaerobic adhesive composition according to an aspect of the present invention includes a (meth)acrylic monomer, an organic peroxide, a curing accelerator, and an isoparaffin wax.

### EFFECTS OF INVENTION

According to an aspect of the present invention, it is possible to suppress the occurrence of coating failure during coating which is caused by drying of the anaerobic adhesive composition.

### DESCRIPTION OF EMBODIMENTS

An anaerobic adhesive composition according to an embodiment of the present invention includes a (meth)acrylic monomer, an organic peroxide, a curing accelerator, and an isoparaffin wax.

As described herein, "(meth)acryl" and "(meth)acrylate" are respectively generic terms for acryl and methacryl and generic terms for acrylate and methacrylate and mean one or both of them. Further, as described herein, "to" means a range including numerical values at both ends ("equal to and more than" and "equal to and less than").

### [(Meth)acrylic Monomer]

The (meth)acrylic monomer is a compound having radical polymerizability. Either one (meth)acrylic monomer or two or more (meth)acrylic monomers may be used. The (meth)acrylic monomer can be appropriately blended according to a known intended function.

Examples of the (meth)acrylic monomer include (meth)acrylic acid, (meth)acrylic acid alkyl ester, phenoxyethyl (meth)acrylate, cyclohexyl (meth)acrylate, tetrahydrofurfuryl (meth)acrylate, isobomyl (meth)acrylate, (meth)acrylic acid hydroxyalkyl ester such as 2-hydroxyethyl methacrylate, poly(meth)acrylate of polyhydric alcohol, epoxy (meth)acrylate obtained by addition reaction of (meth)acrylic acid to epoxy resin, urethane poly(meth)acrylate, polyester poly(meth)acrylate, and di(meth)acrylate of an alkylene oxide adduct of bisphenol A, such as ethoxylated bisphenol A dimethacrylate.

A further example of the (meth)acrylic monomer includes an acidic phosphoric acid ester that contains a (meth)acryloyloxy group. Examples of the ester include mono(meth)acryloyloxyethyl phosphate such as mono(2-hydroxyethylmethacrylate) phosphate, di(meth)acryloyloxyethyl phosphate, mono(meth)acryloyloxypropyl phosphate, di(meth)acryloyloxypropyl phosphate, mono(meth)acryloyloxy-β-chloropropyl phosphate, and di(meth)acryloyloxy-β-chloropropyl phosphate.

The (meth)acrylic monomer is a main component in the anaerobic adhesive composition according to an embodiment of the present invention. The contents of components other than the (meth)acrylic monomer in the anaerobic adhesive composition can be appropriately determined based on the amount of the (meth)acrylic monomer.

### [Organic Peroxide]

The organic peroxide functions as an initiator for radical polymerization of the (meth)acrylic monomer. Either one organic peroxide or two or more organic peroxides may be used.

Examples of the organic peroxide include ketone peroxides, dialkyl peroxides, diacyl peroxides, peroxyesters, and hydroperoxides. Among them, hydroperoxides are more preferable from the viewpoint of curability and storage stability of the anaerobic adhesive composition. Examples of the hydroperoxides include tertiary butyl hydroperoxide, cumene hydroperoxide, diisopropylbenzene hydroperoxide, and p-menthane hydroperoxide.

The content of the organic peroxide in the anaerobic adhesive composition is preferably 0.05 parts by mass or more and more preferably 0.1 part by mass or more relative to 100 parts by mass of the (meth)acrylic monomer, from the viewpoint of curability. In addition, from the viewpoint of further enhancing the storage stability of the anaerobic adhesive composition, the content is preferably 10 parts by mass or less and more preferably 5 parts by mass or less.

### [Curing Accelerator]

The curing accelerator is a component for accelerating the curing of the anaerobic adhesive composition, such as shortening the curing time of the anaerobic adhesive composition, accelerating the curing reaction, or improving adhesiveness by modifying the adhesive surface. Either one curing accelerator or two or more curing accelerators may be used.

Examples of the curing accelerator include tertiary amines such as N,N-dimethylorthotoluidine, N,N-dimethylmetatoluidine, N,N-dimethylparatoluidine, N,N-dimethylaniline, and N,N-dimethylnaphthylamine and heterocyclic amines such as quinoline, quinaldine, quinoxaline, tetrahydroquinoline, and tetrahydroquinaldine, from the viewpoint of maintaining the storage stability of the anaerobic adhesive composition and shortening the curing time. For the curing accelerator, these can be used singly or in combination of two or more thereof. In addition to these curing accelerators, o-benzoic sulfimide may be used in combination as a curing acceleration aid.

The curing accelerator may be a mono- or di-substituted hydroquinone compound or hydrazine compound. Examples of the hydroquinone compound include methylhydroquinone, dimethylhydroquinone, methoxyhydroquinone, 2-t-butylhydroquinone, 2,5-di-t-butylhydroquinone, and quinhydrone. Examples of the hydrazine-based compound include 1-acetyl-2 phenylhydrazine, 1-acetyl-2(p-tolyl)hydrazine, 1-benzoyl-2 phenylhydrazine, 1- (1',1',1'-trifluoro)acetyl-2-phenylhydrazine, 1,5-diphenyl-carbohydrazine, 1-formyl -2 phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-trisulfonylhydrazide.

The content of the curing accelerator in the anaerobic adhesive composition is preferably 0.05 parts by mass or more and more preferably 0.1 part by mass or more relative to 100 parts by mass of the (meth)acrylic monomer, from the viewpoint of further enhancing the curability of the anaerobic adhesive composition. In addition, from the viewpoint of further enhancing the storage stability of the anaerobic adhesive composition, the content is preferably 10 parts by mass or less and more preferably 5 parts by mass or less.

### [Isoparaffin Wax]

The isoparaffin wax is a saturated hydrocarbon having in the main chain a branched structure of a short hydrocarbon such as a methyl group or an ethyl group. The carbon number of the isoparaffin wax is, for example, 20 or more and 40 or less. Either one isoparaffin wax or two or more isoparaffin waxes may be used.

The isoparaffin wax has properties of being more flexible, exhibiting smoother elongation, and being less sticky, than other paraffin waxes. From the viewpoint of exhibiting such properties, the melting point of the isoparaffin wax may be 40 to 55°C, and the penetration of the isoparaffin wax at 25°C may be 30 to 50. The melting point and the penetration of the isoparaffin wax can be measured by known measurement methods thereof in paraffin waxes or may be catalogue values.

The content of the isoparaffin wax in the anaerobic adhesive composition is preferably 0.1 part by mass or more and more preferably 1.0 part by mass or more relative to 100 parts by mass of the (meth)acrylic monomer, from the viewpoint of suppressing weight reduction attributable to drying of the applied anaerobic adhesive composition. The content of the isoparaffin wax is preferably 5 parts by mass or less and more preferably 2 parts by mass or less relative to 100 parts by mass of the (meth)acrylic monomer, from the viewpoint of developing sufficient adhesiveness of the anaerobic adhesive composition.

### [Other Components]

The anaerobic adhesive composition of an embodiment of the present invention may further include other components in addition to those described above, as long as the effect in an embodiment of the present invention is obtained. Either one other component or two or more other components may be used, and examples thereof include a stabilizer, an adhesiveness improving agent, a strength improving agent, and a reducing agent.

The stabilizer is a component for enhancing storage stability of the anaerobic adhesive composition at room temperature. Examples of the stabilizer include a radical polymerization inhibitor and a chelating agent and more specifically include 2,6-di-t-butyl-4-methylphenol, 2,2-methylenebis(4-methyl-6-t-butylphenol), benzoquinone, hydroquinone, quinhydrone, tetrasodium ethylenediaminetetraacetate, oxalic acid, N-methyl-N-nitrosoaniline, and N-nitrosodiphenylamine. The content of the stabilizer in the anaerobic adhesive composition can be appropriately determined from the viewpoint of sufficiently enhancing the storage stability and may be, for example, 0.1 to 5 parts by mass or 0.2 to 1 part by mass relative to 100 parts by mass of the (meth)acrylic monomer.

The adhesiveness improving agent is a component for improving the adhesiveness of the anaerobic adhesive composition or stabilizing the adhesive strength. Examples of the adhesiveness improving agent include: thermoplastic resins such as polymethyl methacrylate, polyvinyl butyral, an acrylonitrile-styrene copolymer (AS resin), an acrylonitrile-butadiene-styrene copolymer (ABS resin), and a methyl methacrylate-butadiene-styrene copolymer (MBS resin); rubbers such as styrenebutadiene rubber (SBR), polybutadiene rubber (BR), polyisoprene rubber (IR), chloroprene rubber (CR), nitrile rubber (NBR), chloride rubber, acrylic rubber, epichlorohydrin rubber, and chlorosulfonated polyethylene; and liquid rubbers such as liquid polybutadiene, terminal acrylic-modified liquid polybutadiene, and a liquid acrylonitrile-butadiene copolymer. The content of the adhesiveness improving agent in the anaerobic adhesive composition can be appropriately determined within a range in which the effect of improving the adhesiveness is obtained and may be, for example, 0 to 50 parts by mass, 5 to 40 parts by weight, or 10 to 30 parts by mass relative to 100 parts by mass of the (meth)acrylic monomer.

The strength improving agent is, for example, a component for improving the mechanical strength in the cured product of the anaerobic adhesive composition. Examples of the strength improving agent include a filler. The filler is an organic particle such as a resin particle or an inorganic particle as described later. Examples of the filler include various powders such as glass, silica, alumina, talc, mica, silicone rubber powder, calcium carbonate, aluminum nitride, carbon powder, kaolin clay, dry clay mineral, and dry diatomaceous earth.

The filler is not particularly limited as long as the desired effect is obtained. For example, the particle size of the filler may be 0.001 to 100 µm, 0.01 to 50 µm, or 0.1 to 20 µm in the average particle size. The average particle size is measured by a laser diffraction method. The content of the filler in the anaerobic adhesive composition may be 0.1 to 300 parts by mass, 1 to 200 parts by mass, or 5 to 100 parts by mass relative to 100 parts by mass of the (meth)acrylic monomer.

Among these, silica is preferable from the viewpoint of suppressing the occurrence of coating failure caused by drying of the anaerobic adhesive composition. The silica may be, for example, hydrophobic silica or hydrophilic silica but is more preferably hydrophilic silica from the viewpoint of suppressing the coating failure caused by drying of the anaerobic adhesive composition. The hydrophobic silica is, for example, silica that is subjected to a surface treatment with a silane compound or silicone oil. The hydrophilic silica is, for example, silica that is not subjected to the surface treatment. The content of the silica in the anaerobic adhesive composition may be, for example, 0.1 to 10 parts by mass or 1 to 5 parts by mass relative to 100 parts by mass of the (meth)acrylic monomer.

Examples of the silica include AEROSIL 50, 90G, 130, 200, 200CF, 200V, 300, 380, R974, R972, R9200, R976, R976S, RX50, NAX50, NX90, RX200, R8200, RX300, R812, R812S, RY50, NY50, RY200S, R202, RY200, RY300, R104, R10, RA200H, RA200HS, R805, R816, RM50, R711, and R7200 (manufactured by NIPPON AEROSIL CO., LTD., "AEROSIL" is a registered trademark of Evonik).

In the anaerobic adhesive composition of an embodiment of the present invention, a primer agent that contains a reducing agent in an organic solvent may be used in combination with the anaerobic adhesive composition for the purpose of accelerating curing. Examples of the method of using the primer agent in combination with the anaerobic adhesive composition include a method of previously applying the primer agent onto a site to be coated with the anaerobic adhesive composition and a method of applying the primer agent to a site protruding from the bonded member and being in contact with oxygen. Examples of the organic solvent include hydrocarbons such as n-pentane, n-hexane, n-heptane, and cyclohexane, halogenated hydrocarbons such as methylene chloride, chloroform, and carbon tetrachloride, methyl alcohol, ethyl alcohol, isopropyl alcohol, ethyl acetate, acetone, methyl methacrylate, and ethyl methacrylate. Examples of the reducing agent are vanadium compounds and more specifically trivalent or tetravalent vanadium compounds. Examples of the vanadium compounds include vanadyl acetylacetonate, vanadyl stearate, vanadyl naphthenate, vanadium benzoylacetonate, vanadium propoxide, vanadium butoxide, and vanadium pentoxide. The content of the vanadium compound in the primer agent can be appropriately determined from the viewpoint of, for example, improving the curing rate and maintaining the storage stability and may be 0.05 to 7 parts by mass, 0.1 to 5 parts by mass, or 0.1 to 3 parts by mass relative to 100 parts by mass of the organic solvent.

Further, the anaerobic adhesive composition of an embodiment of the present invention may further include, as the above-mentioned other components, further additives such as a viscosity modifier, a colorant, an antibacterial agent, and a moisture curing accelerator, as long as the effect of an embodiment of the present invention is obtained.

### [Production Method and Use]

The anaerobic adhesive composition of an embodiment of the present invention may be prepared by mixing the above-described various components. The anaerobic adhesive composition of an embodiment of the present invention may be in the form of one component in which all of the above-described various components are mixed or may be in the form of two or more components which individually contain a part of the above-described various components and contain all the components as a whole. The anaerobic adhesive composition of an embodiment of the present invention can be used, for example, as an adhesive agent for metal adherend to be bonded.

### [Operation and Effect]

The anaerobic adhesive composition of an embodiment of the present invention is applied onto, for example, a metal adherend to be bonded. When an adherend is assembled, the anaerobic adhesive composition fills a gap of the adherend and is cured in the gap by being blocked from the air, that is, under an anaerobic environment.

Incidentally, in a known anaerobic adhesive composition, the anaerobic adhesive composition at the tip of the nozzle in contact with the air is dried, and a film is formed on the surface of the anaerobic adhesive composition, which may cause coating failure. The reason for this is not clear, but it is presumed that a low molecular weight component such as a (meth)acrylic monomer is volatilized on the surface of the anaerobic adhesive composition, whereby a high molecular weight component such as a rubber component contained in the anaerobic adhesive composition aggregates on the surface. This phenomenon may cause not only coating failure but also curing failure of the anaerobic adhesive composition or insufficient adhesive strength.

The anaerobic adhesive composition in an embodiment of the present invention includes, in addition to the basic composition (including the (meth)acrylic monomer, the organic peroxide, and the curing accelerator) of the anaerobic adhesive composition, a wax that is mainly composed of isoparaffin paraffin. Since the anaerobic adhesive composition is substantially composed of the (meth)acrylic monomer, the organic peroxide, the curing accelerator, and the isoparaffin paraffin in this manner, drying of the surface of the anaerobic adhesive composition can be suppressed. As a result, it is possible to suppress coating failure when the anaerobic adhesive composition is applied onto a body to be bonded using a dispenser or the like.

In an embodiment of the present invention, the effect of suppressing drying of the surface of the anaerobic adhesive composition is further enhanced when the anaerobic adhesive composition further includes hydrophilic silica in addition to the above composition.

According to an embodiment of the present invention, the organic volatile component from the anaerobic adhesive composition of an embodiment of the present invention is reduced, and accordingly the environmental load can be minimized. Therefore, an embodiment of the present invention is expected to contribute to sustainable production and consumption in the Sustainable Development Goal (SDGs).

### [Conclusion]

As is apparent from the above description, the anaerobic adhesive composition in an embodiment of the present invention includes a (meth)acrylic monomer, an organic peroxide, a curing accelerator, and an isoparaffin wax. Therefore, in the anaerobic adhesive composition, the formation of a film on the surface at the time of contact with the air is suppressed, and the occurrence of coating failure during coating which is caused by drying of the anaerobic adhesive composition can be suppressed.

The anaerobic adhesive composition in an embodiment of the present invention may include 100 parts by mass of the (meth)acrylic monomer, 0.05 to 10 parts by mass of the organic peroxide, 0.05 to 10 parts by mass of the curing accelerator, and 0.1 to 5 parts by mass of the isoparaffin wax. This configuration is more effective from the viewpoint of sufficiently developing adhesive strength in addition to the above-described suppression of the occurrence of coating failure.

The anaerobic adhesive composition in an embodiment of the present invention may further include hydrophilic silica. This configuration is further effective from the viewpoint of further enhancing the suppression of the occurrence of coating failure.

The present invention is not limited to the above-described embodiments, and various modifications can be made within the scope illustrated in the claims. Embodiments obtained by appropriately combining technical means disclosed in different embodiments are also included in the technical scope of the present invention.

### EXAMPLE

An example of the present invention will be described below.

### [Preparation of Materials]

Materials illustrated in the following Table 1 were prepared. In the table, "Paraffin wax A" is a linear paraffin wax; "Paraffin wax B" is a paraffin wax of a molecular structure in which there may be numerous isomeric structures, containing an alicyclic structure or a double bond in the main chain; and "Paraffin wax C" is an isoparaffin wax.

**[Table 1]**

| Component name | Compound name or product name |
|---|---|
| Acrylic monomer A | 2 -Hydroxyethylmethacrylate |
| Acrylic monomer B | Isobornyl methacrylate |
| Rubber component | MBS resin |
| Curing accelerator A | N,N-Dimethyl-p-toluidine |
| Curing accelerator B | o-Benzoic sulfimide |
| Organic peroxide | Cumene hydroperoxide |
| Paraffin wax A | WAX140 (manufactured by Nippon Seiro Co., Ltd.) |
| Paraffin wax B | HiMic1045 (manufactured by Nippon Seiro Co., Ltd.) |
| Paraffin wax C | EMW0001 (manufactured by Nippon Seiro Co., Ltd.) |
| Hydrophobic silica | AEROSIL RY200S |
| Hydrophilic silica | AEROSIL 200 |

### [Example 1]

Materials listed in the following Table 2 were mixed in amounts listed in Table 2. An anaerobic adhesive composition 1 was thus obtained.

### [Comparative Examples 1 to 8]

Anaerobic adhesive compositions C1 to C8 were obtained in the same manner as in Example 1, except that the materials were changed as illustrated in the following Table 2.

### [Evaluation]

### [1] Drying resistance

The drying resistance of each of the anaerobic adhesive compositions 1 and C1 to C8 was evaluated by the following method.

### (Evaluation Method)

Three grams of the anaerobic adhesive composition is accommodated in a bottomed cylindrical container that is open upward and has an internal space with an inner diameter of 29 mm and a height of 9 mm. From a position 30 mm above the opening of the container, a stream of the air at an air velocity of 4 m/min is continuously sent by a duct to the surface of the anaerobic adhesive composition in the container for 48 hours. The mass of the container in a state of accommodating the anaerobic adhesive composition is measured before and after the air is sent, and the residual mass ratio (%) of the anaerobic adhesive composition after a lapse of 48 hours is calculated. The calculated residual mass ratio was determined according to the following criteria, and the drying resistance was evaluated. The evaluation results are illustrated in Table 2. The residual mass ratio is a mass ratio of the anaerobic adhesive composition and the container at a specific air-sending time to 100% of the anaerobic adhesive composition and the container immediately before the air is sent.

### (Criteria)

Good: The residual mass ratio over time is 99% or more and 100% or less.
Fair: The residual mass ratio over time is 95% or more and less than 99%.
Poor: The residual mass ratio over time is less than 95%.

### [2] Adhesiveness

On a first test piece of a cold-rolled steel sheet (SPCC-SD) having a width of 25 mm × a length of 100 mm × a thickness of 0.6 mm, 200 mg of the anaerobic adhesive composition was applied onto a portion having a width of 25 mm × a length of 70 mm. Meanwhile, on a second test piece of a cold-rolled steel sheet (SPCC-SD) having a width of 25 mm × a length of 100 mm × a thickness of 0.6 mm, 40 mg of the primer solution (vanadium solution) was applied onto a portion having a width of 25 mm × a length of 70 mm. The vanadium solution is a mixed solution of ethanol and vanadyl acetylacetonate.

Then, both the test pieces were superimposed on each other and bonded such that the portion onto which the anaerobic adhesive composition was applied in the first test piece and the portion onto which the primer solution was applied in the second test piece overlapped each other. Using an autograph, pulling was performed at a peeling rate of 50 mm/min in an environment at 23°C, the T-type peeling strength (N/25 mm) at a width of 25 mm was measured, and the maximum value thereof was defined as the T-type peeling strength. When the T-type peeling strength is 80 N/25 mm or more, it is determined that there is no practical problem in the application of bonding in an electronic device. The evaluation results are illustrated in Table 2. In Table 2, "Good" indicates that the T-type peeling strength is 80 N/25 mm or more.

**[Table 2]**

| Component name | | Anaerobic adhesive composition | | | | | | | | |
|---|---|---|---|---|---|---|---|---|---|---|
| | | 1 | C1 | C2 | C3 | C4 | C5 | C6 | C7 | C8 |
| Acrylic monomer A | | 44 | | | | | | | | |
| Acrylic monomer B | | 31 | | | | | | | | |
| Rubber component | | 25 | | | | | | | | |
| Curing accelerator A | | 0.6 | | | | | | | | |
| Curing accelerator B | | 0.9 | | | | | | | | |
| Organic peroxide | | 4 | | | | | | | | |
| Paraffin wax A | | - | - | - | 0.1 | 1.5 | 1.5 | 0.1 | 1.5 | - |
| Paraffin wax B | | - | - | - | - | - | - | - | - | 1.5 |
| Paraffin wax C | | 1.5 | - | - | - | - | - | - | - | - |
| Hydrophobic silica | | - | - | 3.36 | - | - | 1.5 | - | - | - |
| Hydrophilic silica | | 1.5 | - | - | - | - | - | 1.5 | 1.5 | 1.5 |

| Evaluation | | | | | | | | | | |
|---|---|---|---|---|---|---|---|---|---|---|
| Drying resistance | Residual mass ratio (%) | 99.90 | 81.61 | 91.25 | 94.42 | 98.89 | 86.72 | 98.87 | 98.93 | 97.72 |
| | Evaluation | Good | Poor | Poor | Poor | Fair | Poor | Fair | Fair | Fair |
| Adhesiveness | Evaluation | Good | Good | Good | Good | Good | Good | Good | Good | Good |

### [Discussion]

As is apparent from Tables 1 and 2, the anaerobic adhesive composition 1 of Example 1 is superior in drying resistance to any of the anaerobic adhesive compositions C1 to C8 of Comparative Examples 1 to 8. Further, all the anaerobic adhesive composition 1 and the anaerobic adhesive compositions C1 to C8 have sufficient adhesiveness.

As is apparent from the comparison among the anaerobic adhesive composition C1, the anaerobic adhesive composition C3, and the anaerobic adhesive composition C4, Paraffin wax A (linear paraffin wax) develops more strong drying resistance.

Further, as is apparent from the comparison among the anaerobic adhesive composition C2, the anaerobic adhesive composition C4, and the anaerobic adhesive composition C5, the use of a combination of Paraffin wax A and hydrophobic silica cancels the effect of the drying resistance by each of them, and the drying resistance of the anaerobic adhesive composition is lower than the drying resistance by each of them.

Here, according to the comparison among the anaerobic adhesive composition C3, the anaerobic adhesive composition C6, and the anaerobic adhesive composition C7, the use of a combination of Paraffin wax A and hydrophilic silica allows for development of drying resistance by hydrophilic silica in addition to drying resistance by Paraffin wax A.

Therefore, it is considered that the anaerobic adhesive composition C8 including Paraffin wax B (paraffin wax which can contain an alicyclic structure and a double bond) in place of Paraffin wax A also sufficiently develops both drying resistance by Paraffin wax B and drying resistance by hydrophilic silica. Further, the anaerobic adhesive composition 1 including Paraffin wax C (isoparaffin wax) in place of Paraffin wax A is also considered to sufficiently develop both dry resistance by Paraffin wax C and dry resistance by hydrophilic silica.

As is apparent from the comparison among the anaerobic adhesive composition C7, the anaerobic adhesive composition C8, and the anaerobic adhesive composition 1, the anaerobic adhesive composition 1 is most excellent in drying resistance. Therefore, the drying resistance by Paraffin wax C of the anaerobic adhesive composition 1 is superior to the dry resistances by other paraffin waxes A and B. It is noted that the drying resistance after a lapse of 96 hours was evaluated for the anaerobic adhesive composition C7, the anaerobic adhesive composition C8, and the anaerobic adhesive composition 1, and the results indicated that the residual mass ratio of the anaerobic adhesive composition C7 was 96.98%, the residual mass ratio of the anaerobic adhesive composition C8 was 93.14%, and the residual mass ratio of the anaerobic adhesive composition 1 was 99.41%.

The reason why Paraffin wax C has stronger drying resistance than other paraffin waxes A and B in the anaerobic adhesive composition is not clear but is considered as follows. That is, it is considered that since Paraffin wax C has a branched structure in the main chain as compared with other paraffin waxes as described above, Paraffin wax C forms a coarse layer structure as compared with other paraffin waxes. It is considered that this causes the isoparaffin wax to be easily dispersed, the area covering the surface to be increased, evaporation of a low molecular weight component such as a (meth)acrylic monomer from the coating film to be suppressed, and uneven distribution of a high molecular weight component such as a rubber component on the surface of the coating film to be prevented.

Further, Paraffin wax A and hydrophobic silica do not provide the additive effect of drying resistance, but Paraffin waxes A to C and hydrophilic silica provide the additive effect of drying resistance. The reason is not clear but is considered as follows. That is, it is considered that since in the coating film of the anaerobic adhesive composition, hydrophilic silica is compatible with the anaerobic adhesive composition and is uniformly dispersed, the hydrophobic paraffin wax is unevenly distributed in the vicinity of the surface from the anaerobic adhesive composition and develops drying resistance. As described above, it is considered that the paraffin wax and hydrophilic silica have different positions in the coating film that contributes to drying resistance and thus develop the additive effect for drying resistance.

### INDUSTRIAL APPLICABILITY

The present invention can be suitably used for bonding at a portion where metal members are in close contact with each other.

## Claims

1. An anaerobic adhesive composition comprising a (meth)acrylic monomer, an organic peroxide, a curing accelerator, and an isoparaffin wax.

2. The anaerobic adhesive composition according to claim 1, comprising 100 parts by mass of the (meth)acrylic monomer, 0.05 to 10 parts by mass of the organic peroxide, 0.05 to 10 parts by mass of the curing accelerator, and 0.1 to 5 parts by mass of the isoparaffin wax.

3. The anaerobic adhesive composition according to claim 1 or 2, further comprising hydrophilic silica.
